# EUROPÄISCHE PATENTSCHRIFT

(11) **EP 2 291 615 B1**
(45) Veröffentlichungstag und Bekanntmachung des Hinweises auf die Patenterteilung: **11.05.2016**
(21) Anmeldenummer: 09769025.9
(22) Anmeldetag: 26.06.2009
(51) Int. Cl.: G01D 5/20, G01D 5/243

(54) **INDUKTIVER SENSOR**
INDUCTIVE SENSOR
CAPTEUR INDUCTIF

(30) Priorität: 27.06.2008 DE 102008030064; 15.07.2008 DE 102008033090
(43) Veröffentlichungstag der Anmeldung: 09.03.2011
(73) Patentinhaber: Rechner Industrie-Elektronik GmbH, 68623 Lampertheim (DE)
(72) Erfinder: KOHLER, Armin, 68623 Lampertheim (DE)
(74) Vertreter: Bill, Burkart Hartmut
(86) Internationale Anmeldenummer: PCT/EP2009/004643
(87) Internationale Veröffentlichungsnummer: WO 2009/156176

(56) Entgegenhaltungen:
- DE-A1- 4 142 680
- DE-A1- 19 803 187
- GB-A- 2 435 518
- US-A- 4 725 777
- US-A- 5 144 231
- US-A1- 2007 268 014
- US-A1- 2008 079 420

## Beschreibung

### Gebiet der Erfindung

Die Erfindung betrifft einen induktiven Sensor sowie ein Verfahren zur Detektion von Gegenständen mittels eines induktiven Sensors.

### Hintergrund der Erfindung

Induktive Sensoren sind bekannt. Ein induktiver Sensor ist beispielsweise in der deutschen Offenlegungsschrift DE 42 28 888 A1 beschrieben. Herkömmliche induktive Sensoren dienen beispielsweise der Erfassung von Drehzahlen. Dabei wirkt ein induktiver Sensor mit einem Magneten zusammen. Durch eine Änderung des Magnetfeldes aufgrund eines vorbeistreichenden Magneten wird in eine Spule eine Spannung induziert. So kann beispielsweise ein Drehzahlsignal abgegriffen werden.

Eine andere Möglichkeit ist es, in dem Sensor selbst einen Magneten anzuordnen, welcher mit ferromagnetischen Bauteilen zusammenwirkt. So kann ebenfalls über eine Änderung des Magnetfeldes ein ferromagnetischer Gegenstand detektiert werden.

Weiter sind aus der Praxis induktive Sensoren bekannt, welche auf Metalle jeglicher Art reagieren und bei Vorhandensein eines metallischen Körpers in der Nähe des Sensors ein Signal generieren.

Nachteilig an derart bekannten induktiven Sensoren ist unter anderem, dass ein Schaltsignal beim bloßen Vorhandensein eines metallischen Bauteils ein Schaltsignal generiert wird. Dadurch sind derartige Sensoren nur bedingt zur Erfassung von dynamischen Vorgängen geeignet. Weiter sind bekannte induktive Sensoren relativ empfindlich gegenüber Störungen. So kann beispielsweise am Sensor anhaftender Metallstaub, Metallspäne etc. zu einer fehlerhaften Erfassung führen.

Die DE 41 42 680 A1 zeigt einen Wegsensor mit einem Hochpass, der als Filter für Störsignale vorgesehen ist. Die US 5,144,231 A zeigt einen Induktionssensor mit einem Hochpass zur Korrektur von Signalwanderungen.

### Aufgabe der Erfindung

Der Erfindung liegt demgegenüber die Aufgabe zugrunde, die genannten Nachteile des Standes der Technik zumindest zu reduzieren.

Insbesondere ist es eine Aufgabe der Erfindung, einen Sensor bereitzustellen, bei welchem die Erfassung dynamischer Vorgänge verbessert ist. So sollen insbesondere Störungen aufgrund von statischen, in Sensornähe befindlichen, Bauteilen oder sonstigen Metallteilen reduziert werden.

Eine weitere Aufgabe der Erfindung ist es, einen besonders einfachen Sensor bereitzustellen, welcher auch gegenüber relativ kleinen Gegenständen empfindlich ist.

Eine weitere Aufgabe der Erfindung ist es, einen Sensor bereitzustellen, welcher auf jede Art von metallischen Gegenständen reagiert und welcher sich beispielsweise auch gegen bekannte induktive Sensoren, die auf einem ferromagnetischen Prinzip arbeiten, leicht austauschen lässt.

Eine weitere Aufgabe der Erfindung ist es, einen Sensor bereitzustellen, welcher richtungsunabhängig dynamische Vorgänge erfasst und welcher sich von außen anbringen lässt, also nicht erfordert, dass Gegenstände zur Erfassung durch das Innere einer Spule geleitet werden müssen.

### Zusammenfassung der Erfindung

Die Aufgabe der Erfindung wird bereits durch einen induktiven Sensor sowie durch ein Verfahren zur Detektion von Gegenständen mittels eines induktiven Sensors nach einem der unabhängigen Ansprüche gelöst.

Bevorzugte Ausführungsformen und Weiterbildungen der Erfindung sind den jeweiligen Unteransprüchen zu entnehmen.

Die Erfindung betrifft zum einen einen induktiven Sensor, welcher einen Schwingkreis mit einer Spule umfasst. Bei Annäherung eines metallischen Gegenstandes ändern sich die Feldlinien und damit die Induktivität des Systems. So wird der Schwingkreis verstimmt, was in einer Veränderung, insbesondere einer Verringerung der Amplitude oder der Frequenz des Signals des Schwingkreises resultiert. Hierdurch kann auf das Vorhandensein eines Gegenstandes im Erfassungsbereich des Sensors geschlossen werden und ein Ausgangssignal generiert werden.

Der Sensor weist Mittel auf, um von statischen Gegenständen erzeugte Änderungen der Amplitude eines Signals des Schwingkreises zu unterdrücken.

So werden beim Betrieb des Sensors von statischen Bauteilen verursachte Änderungen der Amplitude des Schwingkreises ausgeblendet, wodurch unter anderem eine Störung durch in der Nähe befindliche metallische Bauteile vermieden wird. Weiter ist beispielsweise bei einer Drehzahlerfassung sichergestellt, dass der Sensor kein Ausgangssignal ausgibt, wenn beispielsweise der Zahn eines Ritzels im Erfassungsbereich des Sensors stehengeblieben ist.

Der Sensor gibt also nur ein Signal aus, wenn sich ein Objekt am Sensor vorbei bewegt, nicht aber, wenn sich ein stehendes Objekt im Erfassungsbereich befindet.

Bei einer bevorzugten Ausführungsform der Erfindung weist der Sensor einen Gleichrichter zur Gleichrichtung des Signals des Schwingkreises auf. Die Gleichrichtung des Signals resultiert in einer besseren Weiterverarbeitbarkeit.

Es versteht sich, dass unter Gleichrichtung beispielsweise eines sinusförmigen Signals nicht verstanden wird, dass das Signal bei konstanter Amplitude völlig gleichförmig ist. Unter Gleichrichtung wird vielmehr auch eine Glättung des Signals verstanden.

Gemäß der Erfindung weist der Sensor einen Schwellwertvergleicher auf.

So ist vorgesehen, ein gleichgerichtetes Signal mittels eines Schwellwertvergleichers weiterzuverarbeiten und so auf das Vorhandensein eines sich bewegenden Gegenstandes zu schließen.

Bei einer bevorzugten Ausführungsform der Erfindung kann der Schwellwert und/oder der Oszillatorstrom eingestellt oder verändert werden, so dass eine einfache Einstellung des Schaltabstandes möglich ist. Vorzugsweise wird der Oszillatorstrom eingestellt, da so in der Regel eine höhere Auflösung des Sensors erreicht wird.

Ein Ausgangssignal wird vorzugsweise über eine Endstufe generiert, wenn der Schwellwert unter- beziehungsweise überschritten wird.

Bei einer Weiterbildung der Erfindung weist der Sensor Mittel auf, um die Amplitude und/oder Frequenz des Schwingkreises bei statischer Bedämpfung einem vorgegebenen Sollwert nachzuregeln.

Es ist insbesondere vorgesehen, die Amplitude und/oder Frequenz des Schwingkreises über einen längeren Erfassungszeitraum gegen einen vorgegebenen Sollwert zu regeln. So wird beispielsweise vermieden, dass sich bei Ablagerungen von metallischen Gegenständen im Erfassungsbereich des Sensors die Amplitude immer weiter reduziert, was eventuell zu einer schlechteren Empfindlichkeit des Sensors oder sogar zum Ausfall des Sensors führen kann. Eine derartige Regelung kann beispielsweise dadurch erfolgen, dass über eine Schaltung die Amplitude über einen vorgegebenen längeren Zeitraum, beispielsweise zumindest 1 Minute, erfasst wird und, wenn die Amplitude über diesen längeren Zeitraum unter einem vorgegebenen Sollwert liegt, beispielsweise die Kapazität eines Kondensators des Schwingkreises derart verändert wird, dass die Amplitude wieder ansteigt.

Der induktive Sensor ist vorzugsweise zur kontinuierlichen Messung ausgebildet.

Die Auflösung des Sensors wird daher im Wesentlichen durch die Frequenz des Schwingkreises vorgegeben. Der unbedämpfte Schwingkreis hat bei einer bevorzugten Ausführungsform der Erfindung eine Frequenz zwischen 10 kHz und 1000 kHz, vorzugsweise zwischen 300 kHz und 700 kHz. So ist der Sensor geeignet, nacheinander folgende Objekte in sehr kurzen Abständen zu erfassen.

Die Mittel, um von statischen Gegenständen erzeugte Änderungen der Amplitude des Signals des Schwingkreises zu unterdrücken, umfassen vorzugsweise zumindest einen Kondensator. Diese Ausgestaltung ermöglicht eine besonders einfache Schaltung. Alternativ kann auch eine elektronische Filterung zum Beispiel auch mit einem Microcontroller erfolgen.

Bei einer bevorzugten Ausführungsform der Erfindung bildet der Kondensator einen Hochpass, an den das gleichgerichtete Signal des Schwingkreises weitergeleitet wird.

Bei einem sich vorbei bewegenden Gegenstand ändert sich die Amplitude des Schwingkreises und damit auch der Betrag des gleichgerichteten Signals. Über einen Kondensator können auf besonders einfache Weise beispielsweise Frequenzen von weniger als 0,5 Hz, vorzugsweise von weniger als 1 Hz und besonders bevorzugt von weniger als 2 Hz ausgeblendet werden.

Das Signal gelangt somit also nur dann zur Weiterverarbeitung in einen Schwellwertvergleicher, wenn es sich um einen dynamischen Vorgang handelt.

Der Sensor ist vorzugsweise derart ausgebildet, dass sich der Erfassungsbereich außerhalb der Spule befindet.

Insbesondere ist vorgesehen, eine Spule in einem im Wesentlichen zylindrisch ausgebildeten Sensorgehäuse einzubauen, wobei sich der Erfassungsbereich im vorderen Bereich außerhalb des Sensorgehäuses befindet.

Ein derartiger Sensor kann in besonders einfacher Weise von außen eingebaut werden und ist somit insbesondere zum Austausch von bekannten, nach jedem bisher bekannten Prinzip arbeitenden induktiven Sensoren geeignet.

Die Spulenachse liegt dabei vorzugsweise auf einer Mittelachse des zylindrisch ausgebildeten Sensorgehäuses.

Bei einer Weiterbildung der Erfindung weist der Sensor beziehungsweise das Sensorgehäuse ein Gewinde zum einfachen Einschrauben auf.

Sämtliche für den Betrieb des Sensors erforderliche Elektronik ist bei einer bevorzugten Ausführungsform der Erfindung in dem Sensorgehäuse angeordnet, insbesondere auf einer Platine, welche vom Erfassungsbereich aus gesehen hinter der Spule angeordnet ist.

Die Erfindung betrifft des Weiteren ein Verfahren zur Detektion von Gegenständen mittels eines induktiven Sensors.

Dabei wird mittels eines Schwingkreises ein elektrisches beziehungsweise magnetisches Feld erzeugt. Durch metallische Gegenstände im Erfassungsbereich wird der Schwingkreis verstimmt, wodurch sich dessen Amplitude oder Frequenz ändert.

Das Signal des Schwingkreises wird gleichgerichtet und an einen Hochpass weitergeleitet.

Das Signal durchläuft den Hochpass somit nur dann, wenn es sich in einer vorgegebenen Mindestfrequenz ändert.

So erreichen einen Schwellwertvergleicher nur Signale, welche einen dynamischen Vorgang widerspiegeln.

Über den Schwellwertvergleicher wird in bekannter Weise, etwa über eine Endstufe, ein Ausgangssignal generiert, wenn der Schwellwert über- oder unterschritten wird.

Die statischen Anteile des Signals des Schwingkreises werden dabei vorzugsweise mittels zumindest eines Kondensators und/oder Microcontrollers herausgefiltert.

### Kurzbeschreibung der Zeichnungen

Die Erfindung soll im Folgenden bezugnehmend auf die Zeichnungen Fig. 1 bis Fig. 5 näher erläutert werden.
Fig. 1 zeigt schematisch das Prinzip bekannter induktiver Sensoren,
bezugnehmend auf
Fig. 2 und 2a soll schematisch das Prinzip eines erfindungsgemäßen Sensors, welcher nur dynamische Vorgänge erfasst, näher erläutert werden,
Fig. 3 zeigt ein beispielhaftes Schaltbild eines erfindungsgemäßen Sensors,
Fig. 4 und Fig. 5 zeigen einen induktiven Sensor.

### Detaillierte Beschreibung der Zeichnungen

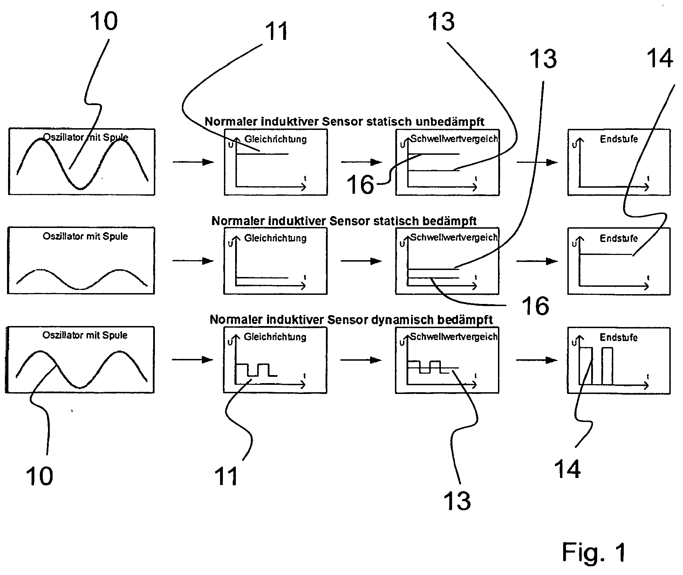

In Fig. 1 ist schematisch die Funktion eines induktiven Sensors, welcher auch statische Vorgänge erfasst, dargestellt. Dabei sind untereinander die Zustände statisch unbedämpft, statisch bedämpft und dynamisch bedämpft zum Vergleich dargestellt.

In der ersten Spalte ist jeweils das Signal des Schwingkreises 10 dargestellt.

In der obersten Reihe ist der induktive Sensor statisch unbedämpft, das Signal des Schwingkreises 10 liegt auf einem maximalen Wert.

Das Signal des Schwingkreises 10 wird in ein gleichgerichtetes Signal 11 umgewandelt und an einen Schwellwertvergleicher weitergeleitet. Das am Schwellwertvergleicher anliegende Signal 16 entspricht somit dem gleichgerichteten Signal 11.

Hier liegt in der ersten Zeile, dritte Spalte das gleichgerichtete und an den Schwellvergleicher weiter geleitete Signal 16 über dem gesetzten Schwellwert 13. Der Sensor ist derart ausgebildet, dass ein Ausgangssignal nur generiert wird, wenn der Schwellwert 13 unterschritten wird. Dementsprechend wird, wie in der obersten Zeile rechts zu sehen ist, bei einem unbedämpften Sensor kein Ausgangssignal von der Endstufe ausgegeben.

Die zweite Zeile zeigt einen statisch bedämpften Sensor. Infolge der Verstimmung des Schwingkreises ist die Amplitude in der ersten Spalte, zweite Zeile geringer als oben in der ersten Zeile.

Zu erkennen ist, dass auch das gleichgerichtete Signal 11 nunmehr kleiner ist als in der ersten Zeile.

Beim Schwellwertvergleicher liegt nunmehr das gleichgerichtete, am Schwellvergleicher anliegende Signal 16 unter dem Schwellwert 13.

Dementsprechend gibt die Endstufe ein Ausgangssignal 14 aus.

Der Sensor liefert nunmehr ein Ausgangssignal, obwohl lediglich ein stehendes Bauteil im Erfassungsbereich vorhanden ist. So kann es beispielsweise leicht zu Störungen kommen, beispielsweise dadurch, dass metallische Bauteile zu nahe am Sensor angeordnet sind. Beispielsweise ist in bestimmten Anwendungsfällen eine Drehzahlerfassung nicht mehr möglich, da der Sensor ständig ein Ausgangssignal liefert.

In der dritten Zeile dargestellt ist die dynamische Bedämpfung des Sensors. Bei einer dynamischen Veränderung ändert sich die Amplitude des Signals des Schwingkreises 10 fortlaufend, während der metallische Gegenstand den Erfassungsbereich des Sensors durchläuft.

Dementsprechend ändert sich auch die Amplitude des gleichgerichteten Signals 11. In der hier idealisierten Form ist dies als Rechtecksignal dargestellt.

Das gleichgerichtete, am Schwellwertvergleicher anliegende Signal 16 liegt nunmehr periodisch unterhalb des Schwellwertes 13, so dass die Endstufe ein periodisches Ausgangssignal 14 ausgibt.

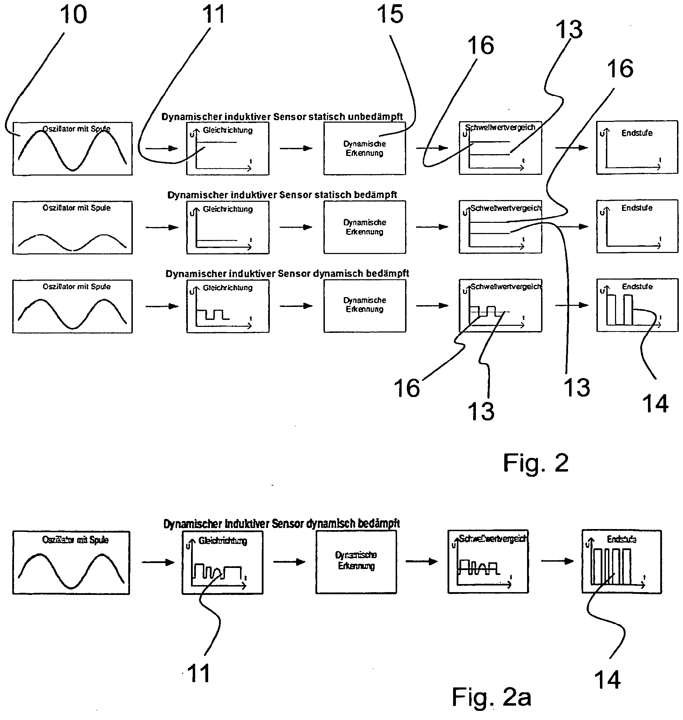

Bezugnehmend auf Fig. 2 soll das Grundprinzip der Erfindung erläutert werden. Entsprechend der Darstellung in Fig. 1 sind die drei Zustände statisch unbedämpft, statisch bedämpft und dynamisch bedämpft zeilenweise untereinander dargestellt.

Die erste Zeile entspricht dabei im Wesentlichen einem herkömmlichen Sensor. Das gleichgerichtete an dem Schwellwertvergleicher anliegende Signal 16 liegt ohnehin über dem Schwellwert 13, so dass die Endstufe kein Ausgangssignal ausgibt.

Bei einem statisch bedämpften Sensor ist, wie bereits in Fig. 1 dargestellt, die Amplitude des Signals des Schwingkreises 10 geringer, so dass auch das gleichgerichtete Signal 11 eine niedrigeren Wert hat. Über eine dynamische Erkennung 15, etwa in Form eines Hochpasses, welcher das gleichgerichtete Signal nur passieren lässt, wenn sich dieses mit einer vorgegebenen Frequenz ändert, wird erreicht, dass das gleichgerichtete Signal 11 derart gesperrt wird, dass das am Schwellwertvergleicher anliegende Signal 16 im Wesentlichen dem Signal des unbedämpften Sensors entspricht. Dementsprechend liegt in der zweiten Zeile das gleichgerichtete Signal 16 im Schwellwertvergleicher über dem Schwellwert 13, so dass die Endstufe kein Ausgangssignal ausgibt.

Hierdurch kann die Genauigkeit des Sensors erheblich verbessert werden, insbesondere ist eine präzisere Einstellung des Schaltabstandes möglich.

Die dynamische Bedämpfung, welche in Zeile 3 dargestellt ist, entspricht wiederum im Wesentlichen der Darstellung in Fig. 1. Der Wert des gleichgerichteten Signals 11 wechselt, wodurch der Filter für statische Vorgänge, hier als dynamische Erkennung 15 bezeichnet, welcher vorzugsweise als Hochpass ausgelegt ist, das Signal 11 durchlässt. Nunmehr liegt das am Schwellwertvergleicher anliegende Signal 16 periodisch unterhalb des Schwellwertes und die Endstufe gibt ein periodisches Ausgangssignal 14 aus.

Fig. 2a zeigt entsprechend der Fig. 2 einen erfindungsgemäßen Sensor, welcher dynamisch bedämpft ist, wobei in dieser Darstellung durch sich mit verschiedener Geschwindigkeit vorbeibewegende Gegenstände ein unregelmäßiges gleichgerichtetes Signal 11 vorliegt.

Die Verarbeitung erfolgt analog Fig. 2.
Anhand dieser Darstellung ist zu erkennen, dass das Ausgangssignal 14 eine Impulsbreite aufweist, welche durch den Hochpass beziehungsweise die Mittel zur Unterdrückung der von statischen Gegenständen erzeugten Änderungen der Amplitude und/oder Frequenz begrenzt ist.

Gerät nämlich ein zu erfassender, sich bewegender Gegenstand in den Erfassungsbereich des Sensors, wird, sofern sich dieser über eine längere Zeit vorbeibewegt, nur das Eintreten des Gegenstandes in den Erfassungsbereich erfasst, da die weitere Bedämpfung ebenfalls durch den Hochpass unterdrückt wird. Die Impulsbreite ist mithin begrenzt.

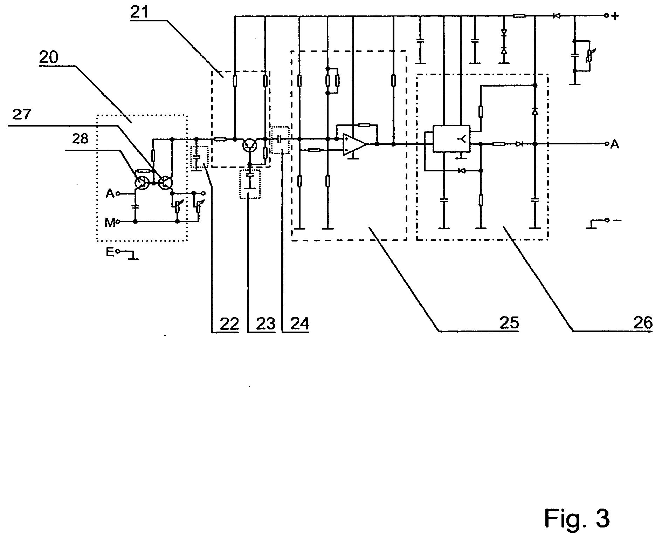

Fig. 3 zeigt schematisch ein Schaltbild eines erfindungsgemäßen Sensors. Zur Erläuterung sind dabei die wesentlichen Funktionsbestandteile des Schaltkreises in Gruppen eingeteilt.

Der Schaltkreis umfasst einen mit einer Spule verbundenen Schwingkreis 20, welcher ein vorzugsweise sinusförmiges Ausgangssignal liefert. Im Falle der Annäherung eines metallischen Gegenstandes (nicht dargestellt) wird der Schwingkreis 20 verstimmt, so dass die Amplitude des Signals, welches an einen Gleichrichter 21 weitergeleitet wird, verringert wird.

Der Schwingkreis umfasst die beiden Transistoren 27 und 28, durch deren Verwendung eine Temperaturempfindlichkeit vermieden wird. Die Anschlüsse der Spule sind mit A und M gekennzeichnet.

Der Gleichrichter 21 ist in diesem Ausführungsbeispiel als Siebschaltung mit den Kondensatoren 22 und 23 ausgebildet, so dass das Signal keine ideale Gleichrichtung erfährt, sondern lediglich geglättet wird.

Das so gleichgerichtete Signal wird über einen Kondensator 24 an einen Schwellwertvergleicher 25 weitergeleitet.

Der Kondensator 24 wirkt dabei als Hochpass, so dass ein verändertes Signal am Schwellwertvergleicher 25 nur dann anliegt, wenn sich der Betrag des gleichgerichteten Signals in einer Mindestfrequenz ändert. Hierdurch wird eine statische Bedämpfung des Sensors unterdrückt.

Beim Unterschreiten eines Schwellwertes leitet der Schwellwertvergleicher 25 das Signal an eine Endstufe 26 weiter, die ein geeignetes Ausgangssignal ausgibt.

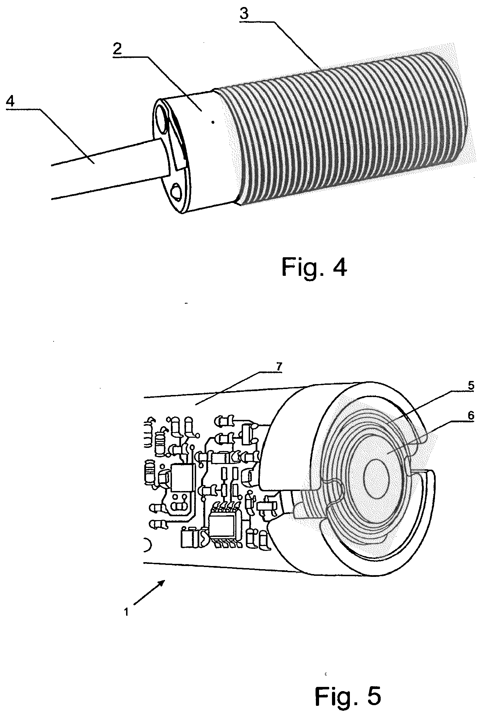

Bezugnehmend auf Fig. 4 und Fig. 5 soll die konstruktive Ausgestaltung eines Sensors näher erläutert werden.

Wie in Fig. 4 dargestellt, umfasst der induktive Sensor 1 ein Gehäuse 2 mit einem Gewinde 3. So lässt sich der induktive Sensor 1 leicht von außen an geeigneter Stelle plazieren und ist insbesondere zum Austausch bekannter induktiver Sensoren, welche auf dem magnetischen Prinzip beruhen, geeignet. Der Sensor 1 umfasst eine Anschlussleitung 4, über die vorzugsweise auch der Schaltabstand eingestellt werden kann.

Fig. 5 zeigt einen erfindungsgemäßen induktiven Sensor 1 mit geöffnetem Gehäuse.

Im vorderen Bereich des Sensors befindet sich eine Spule 5 mit einem Ferrit-Kern 6. Der Erfassungsbereich liegt somit vorne außerhalb der Spule 5. Die von der Spule 5 aufgespannte Ebene steht dabei im Wesentlichen senkrecht zur Achse des Sensors 1.

Hinter der Spule 5 befindet sich eine Platine 7, auf welcher die Sensorelektronik angeordnet ist.

Der erfindungsgemäße Sensor eignet sich besonders zur besseren Erkennung kleinerer, sich bewegender Massen, ist richtungsunabhängig und kann von außen angebracht werden.

Es versteht sich, dass die Erfindung nicht auf eine Kombination vorstehend beschriebener Merkmale beschränkt ist, sondern dass der Fachmann sämtliche Merkmale, soweit dies sinnvoll ist, kombinieren wird.

### Bezugszeichenliste

- 1: induktiver Sensor
- 2: Gehäuse
- 3: Gewinde
- 4: Anschlussleitung
- 5: Spule
- 6: Ferrit-Kern
- 7: Platine
- 10: Signal des Schwingkreises
- 11: gleichgerichtetes Signal
- 13: Schwellwert
- 14: Ausgangssignal
- 15: dynamische Erkennung
- 16: am Schwellwertvergleicher anliegendes Signal
- 20: Schwingkreis
- 21: Gleichrichter
- 22: Kondensator
- 23: Kondensator
- 24: Kondensator
- 25: Schwellwertvergleicher
- 26: Endstufe
- 27: Transistor
- 28: Transistor

## Patentansprüche

1. Induktiver Sensor (1), umfassend einen Schwingkreis (20) mit einer Spule (5), wobei sich zumindest die Amplitude und/oder Frequenz eines Signals (10) des Schwingkreises bei Vorhandensein eines Gegenstandes in Nähe der Spule (5) ändert und so ein Ausgangssignal (14) generierbar ist, wobei der Sensor (1) Mittel aufweist, um von statischen Gegenständen erzeugte Änderungen der Amplitude und/oder Frequenz eines Signals des Schwingkreises (10) zu unterdrücken, so dass der Sensor (1) nur ein Signal ausgibt, wenn sich ein Objekt am Sensor vorbei bewegt, nicht aber, wenn sich ein stehendes Objekt im Erfassungsbereich befindet, wobei der Sensor eine dynamische Erkennung (15) mit einem Schwellwertvergleicher (25) aufweist, welche ein gleichgerichtetes Signal (11) des Schwingkreises (20) nur dann passieren lässt, wenn dieses sich mit einer vorgegebenen Mindestfrequenz ändert, so dass das gleichgerichtete Signal (11) bei statischer Bedämpfung des Sensors (1) derart gesperrt wird, dass das am Schwellwertvergleicher (25) anliegende Signal im Wesentlichen dem Signal eines unbedämpften Sensors entspricht.

2. Induktiver Sensor nach dem vorstehenden Anspruch, wobei der Sensor (1) einen Gleichrichter (21) zur Gleichrichtung eines Signals des Schwingkreises (20) aufweist.

3. Induktiver Sensor nach einem der vorstehenden Ansprüche, wobei der Sensor (1) einen Schwellwertvergleicher (25) aufweist.

4. Induktiver Sensor nach dem vorstehenden Anspruch, wobei der Sensor (1) Mittel zum Erzeugen eines Ausgangssignals (14) aufweist, wenn sich die Differenz eines Signals zu einem Schwellwert (13) ändert.

5. Induktiver Sensor nach einem der vorstehenden Ansprüche, wobei der Sensor Mittel aufweist, um die Amplitude und/oder Frequenz des Schwingkreises (20) bei statischer Bedämpfung einem vorgegebenen Sollwert nachzuregeln.

6. Induktiver Sensor nach einem der vorstehenden Ansprüche, wobei der induktive Sensor (1) zur kontinuierlichen Messung ausgebildet ist.

7. Induktiver Sensor nach einem der vorstehenden Ansprüche, wobei der unbedämpfte Schwingkreis eine Frequenz zwischen 10 kHz und 1000 kHz, vorzugsweise zwischen 300 und 700 kHz aufweist.

8. Induktiver Sensor nach einem der vorstehenden Ansprüche, wobei die Mittel, um von statischen Gegenständen erzeugte Änderungen der Amplitude und/oder Frequenz eines Signals (10) des Schwingkreises zu unterdrücken zumindest einen Kondensator (22) umfassen.

9. Induktiver Sensor nach einem der vorstehenden Ansprüche, wobei der Erfassungsbereich des Sensors (1) einen Raum außerhalb der Spule (5) umfasst.

10. Induktiver Sensor nach einem der vorstehenden Ansprüche, wobei der Sensor (1) im Wesentlichen zylindrisch ausgebildet ist, wobei die Spule (5) in einem vorderen Bereich des Sensors (1) angeordnet ist.

11. Induktiver Sensor nach dem vorstehenden Anspruch, wobei die von der Spule aufgespannte Ebene quer, vorzugsweise im Wesentlichen senkrecht zur Mittelachse des zylindrisch ausgebildeten Sensors steht.

12. Induktiver Sensor nach einem der vorstehenden Ansprüche, wobei der Sensor (1) ein Gewinde (3) zum Einschrauben aufweist.

13. Induktiver Sensor nach einem der vorstehenden Ansprüche, wobei die Impulsbreite des Sensors (1) durch die Mittel zur Unterdrückung von statischen Gegenständen erzeugter Änderungen der Amplitude und/oder Frequenz des Schwingkreises begrenzt ist.

14. Verfahren zur Detektion von bewegten Gegenständen mittels eines induktiven Sensors (1), umfassend die Schritte:
- Erzeugen eines elektrischen Wechselfeldes mittels eines Schwingkreises (20), wobei sich die Amplitude und/oder Frequenz eines Signals (10) des Schwingkreises bei Vorhandensein eines Gegenstandes ändert;
- Gleichrichten des Signals (10) des Schwingkreises;
- Weiterleiten des gleichgerichteten Signals an einen Hochpass (22), wobei durch den Hochpass (22) von nicht bewegten Gegenständen verursachte Bedämpfungen des Schwingkreises (20) gefiltert werden;
- Vergleichen des Signals mit einem Schwellwert (13);
- Generieren eines Ausgangssignals, wenn der Schwellwert (13) über- oder unterschritten wird.

15. Verfahren zur Detektion von Gegenständen mittels eines induktiven Sensors nach dem vorstehenden Anspruch, wobei statische Anteile des Signals (10) des Schwingkreises mittels eines Kondensators (22) oder Microcontrollers herausgefiltert werden.

## Claims

1. Inductive sensor (1) which includes an oscillating circuit (20) having a coil (5), wherein at least the amplitude and/or frequency of a signal (10) of the oscillating circuit changes when an object is present in the vicinity of the coil (5), and an output signal may thus be generated,
**characterized in that** the sensor (1) has means for suppressing changes in the amplitude and/or frequency of a signal of the oscillating circuit caused by static objects, such that the sensor (1) emits a signal only when an object passes the sensor, but not when a stationary object is present in the detection range, wherein the sensor (1) comprises a dynamic recognition (15) having a threshold value comparator (25) allowing the rectified signal (11) of the oscillating circuit to pass through only when it changes at a predefined frequency, so that the rectified signal (11) is blocked in such a way that the signal present at the threshold value comparator (25) essentially corresponds to the signal of an undamped sensor.

2. Inductive sensor according to the preceding claim, **characterized in that** the sensor (1) has a rectifier (21) for rectifying a signal of the oscillating circuit (20).

3. Inductive sensor according to one of the preceding claims, **characterized in that** the sensor (1) has a threshold value comparator (25).

4. Inductive sensor according to the preceding claim, **characterized in that** the sensor (1) has means for generating an output signal (1) when the difference of a signal with respect to a threshold value (13) changes.

5. Inductive sensor according to one of the preceding claims, **characterized in that** the sensor has means for readjusting the amplitude and/or frequency of the oscillating circuit (20) at static damping to a predefined set point.

6. Inductive sensor according to one of the preceding claims, **characterized in that** the inductive sensor (1) is designed for continuous measurement.

7. Inductive sensor according to one of the preceding claims, **characterized in that** the undamped oscillating circuit has a frequency between 10 kHz and 1000 kHz, preferably between 300 kHz and 700 kHz.

8. Inductive sensor according to one of the preceding claims, **characterized in that** the means for suppressing changes in the amplitude of a signal (10) of the oscillating circuit caused by static objects include at least one capacitor (22).

9. Inductive sensor according to one of the preceding claims, **characterized in that** the detection range of the sensor (1) includes a space outside the coil (5).

10. Inductive sensor according to one of the preceding claims, **characterized in that** the sensor (1) has an essentially cylindrical design, the coil (5) being situated in a front region of the sensor (1).

11. Inductive sensor according to the preceding claim, **characterized in that** the plane defined by the coil is transverse, preferably essentially perpendicular, to the center axis of the cylindrical sensor.

12. Inductive sensor according to one of the preceding claims, **characterized in that** the sensor (1) has a thread (3) for screwing in.

13. Inductive sensor according to one of the preceding claims, **characterized in that** the pulse width of the sensor (1) is limited by the means for suppressing changes in the amplitude and/or frequency of the oscillating circuit caused by static objects.

14. Method for detecting moving objects using an inductive sensor (1), comprising the following steps:
- generating an electrical alternating field using an oscillating circuit (20), wherein the amplitude and/or frequency of a signal (10) of the oscillating circuit changes when an object is present;
- rectifying the signal (10) of the oscillating circuit;
- forwarding the rectified signal to a high-pass filter (22), wherein damping of the oscillating circuit caused by nonmoving objects is filtered by the high-pass filter;
- comparing the signal to a threshold value (13); and
- generating an output signal when the threshold value (13) is underran or exceeded.

15. Method for detecting objects using an inductive sensor according to the preceding claim, **characterized in that** static portions of the signal (10) of the oscillating circuit are filtered out by means of a capacitor (22) or microcontroller.

## Revendications

1. Capteur inductif (1), comprenant un circuit oscillant (20) pourvu d'une bobine (5), au moins l'amplitude et/ou la fréquence d'un signal (10) du circuit oscillant variant en présence d'un objet proche de la bobine (5) et un signal de sortie (14) pouvant ainsi être généré, le capteur (1) comprenant des moyens destinés à éliminer les variations d'amplitude et/ou de fréquence d'un signal du circuit oscillant (10) produites par des objets statiques, de sorte que le capteur (1) ne délivre de signal que lorsqu'un objet passe devant le capteur, mais pas lorsqu'un objet fixe se situe dans la zone de détection, le capteur comprenant une détection dynamique (15) qui est pourvue d'un comparateur de valeurs seuils (25) et qui ne laisse passer un signal redressé (11) du circuit oscillant (20) que lorsque ce dernier varie à une fréquence minimale prédéfinie, de sorte que le signal redressé (11), dans le cas d'une atténuation statique du capteur (1), est bloqué de telle manière que le signal appliqué sur le comparateur de valeurs seuil (25) correspond sensiblement au signal d'un capteur non atténué,

2. Capteur inductif selon la revendication précédente, le capteur (1) comprenant un redresseur (21) destiné à redresser un signal du circuit oscillant (20).

3. Capteur inductif selon l'une quelconque des revendications précédentes, le capteur (1) comprenant un comparateur de valeurs seuil (25).

4. Capteur inductif selon l'une quelconque des revendications précédentes, le capteur (1) comprenant des moyens destinés à produire un signal de sortie (14) lorsque la différence entre un signal et une valeur seuil (13) varie.

5. Capteur inductif selon l'une quelconque des revendications précédentes, le capteur comprenant des moyens destinés à réajuster l'amplitude et/ou la fréquence du circuit oscillant (20) à une valeur théorique prédéfinie en cas d'atténuation statique.

6. Capteur inductif selon l'une quelconque des revendications précédentes, le capteur inductif (1) étant conçu pour effectuer une mesure en continu.

7. Capteur inductif selon l'une quelconque des revendications précédentes, dans lequel le circuit oscillant non atténué présente une fréquence comprise entre 10 kHz et 1000 kHz, de préférence entre 300 et 700 kHz.

8. Capteur inductif selon l'une quelconque des revendications précédentes, dans lequel les moyens destinés à éliminer les variations d'amplitude et/ou de fréquence d'un signal (10) du circuit oscillant produites par des objets statiques comprennent au moins un condensateur (22).

9. Capteur inductif selon l'une quelconque des revendications précédentes, la zone de détection du capteur (1) comprenant un espace situé à l'extérieur de la bobine (5).

10. Capteur inductif selon l'une quelconque des revendications précédentes, le capteur (1) étant sensiblement cylindrique, la bobine (5) étant disposée dans une zone avant du capteur (1).

11. Capteur inductif selon l'une quelconque des revendications précédentes, dans lequel le plan sous-tendu par la bobine est transversal, de préférence sensiblement perpendiculaire à l'axe médian du capteur cylindrique.

12. Capteur inductif selon l'une quelconque des revendications précédentes, le capteur (1) comprenant un filet (3) lui permettant d'être inséré par vissage.

13. Capteur inductif selon l'une quelconque des revendications précédentes, dans lequel la largeur d'impulsion du capteur (1) est limitée par les moyens destinés à éliminer les variations d'amplitude et/ou de fréquence du circuit oscillant produites par des objets statiques.

14. Procédé de détection d'objets en mouvement au moyen d'un capteur inductif (1), comprenant les étapes consistant à :
- produire un champ électrique alternatif au moyen d'un circuit oscillant (20), l'amplitude et/ou la fréquence d'un signal (10) du circuit oscillant variant en présence d'un objet ;
- redresser le signal (10) du circuit oscillant ;
- transmettre le signal redressé à un filtre passe-haut (22), les atténuations du circuit oscillant (20) provoquées par des objets non en mouvement étant filtrées par le filtre passe-haut (22) ;
- comparer le signal à une valeur seuil (13) ;
- générer un signal de sortie lorsque la valeur seuil (13) est dépassée ou n'est pas atteinte.

15. Procédé de détection d'objets au moyen d'un capteur inductif selon la revendication précédente, dans lequel des parts statiques du signal (10) du circuit oscillant sont éliminées par filtrage au moyen d'un condensateur (22) ou d'un microcontrôleur.
